# NEUE EUROPÄISCHE PATENTSCHRIFT

(11) **EP 0 342 338 B2**
(45) Veröffentlichungstag und Bekanntmachung des Hinweises auf die Entscheidung über den Einspruch: **03.04.1996**
(45) Hinweis auf die Patenterteilung: 10.02.1993
(21) Anmeldenummer: 89105394.4
(22) Anmeldetag: 27.03.1989
(51) Int. Cl.: A47J 37/10, A47J 27/022

(54) **Kochgefäss aus Leichtmetall mit hitzebeständigem, formstabilem Boden**
Cooking vessel made of light metal and provided with a heat-resistant and form-stable bottom
Récipient de cuisson en métal léger muni d'un fond résistant à la chaleur et indéformable

(30) Priorität: 17.05.1988 IT 2060488
(43) Veröffentlichungstag der Anmeldung: 23.11.1989
(73) Patentinhaber: BALLARINI PAOLO & FIGLI S.p.A., I-46017 Rivarolo Mantovano (MN) (IT)
(72) Erfinder: Ferron, Francesco, I-46017 Rivarolo Mantovano (MN) (IT); Ballarini, Guido, I-46017 Rivarolo Mantovano (MN) (IT); Dall'Asta, Massimo, I-46017 Rivarolo Mantovano (MN) (IT)
(74) Vertreter: Mayer, Hans Benno, Dipl.-Ing.

(56) Entgegenhaltungen:
- CH-A- 181 498
- DE-U- 8 630 614
- FR-A- 400 289
- FR-A- 1 196 623
- GB-A- 15 091
- GB-A- 543 735
- US-A- 4 676 151

## Beschreibung

Die vorstehende Erfindung betrifft ein Kochgefaess wie z.B. eine Pfanne, ein Braeter oder ein aehnliches Kochgefaess, aus Leichtmetall, z.B. Aluminium, zum Zubereiten von Speisen, mit einem Gefaessboden, der Formstabilitaet aufweist, wenn er auf eine Kochplatte aufgesetzt und erhitzt wird.

Die Erfindung ist anwendbar bei Boeden fuer Pfannen, Braetern, Kasserolen und allgemein fuer alle Kochgefaesse aus Aluminium, die fuer die Zubereitung von Speisen mittels Waerme Verwendung finden, auch wenn in der folgenden Beschreibung aus Gruenden der Einfachheit allgemein die Bezeichnung Kochgefaess verwendet wird.

Kochgefaesse aus Aluminium fuer die Zubereitung von Speisen haben wesentliche Vorteile gegenueber Kochgefaessen aus Edelstahl, emailliertem Stahl oder Keramik. Sie weisen aber bei Einsatz der immer mehr verwendeten elektrischen oder keramischen Kochfelder als Waermequelle erhebliche Nachteile auf.

Es ist bekannt, dass der Boden eines Kochgefaesses, wenn dieses einer Waermequelle ausgesetzt wird, eine ungleichmaessige Waermedehnung erfaehrt, da die Flaeche des Gefaessbodens, die der Waermequelle direkt ausgesetzt ist, hoehere Temperatur erreicht als die Flaeche im Inneren des Kochgefaesses, die von den zu kochenden Speisen bedeckt ist. Dieses Temperaturgefaelle verursacht eine unterschiedliche Waermedehnung der aeusseren Bodenflaeche gegenueber der inneren Gefaessflaeche, und es tritt eine Woelbung des Gefaessbodens, der der Waermequelle ausgesetzt ist, ein. Diese Erscheinung tritt nicht als Nachteil auf, wenn die Waermequelle aus einem Gasbrenner besteht, bei welchem Gitter oder Auflagearme vorgesehen sind, die einen ausreichenden Reibungskoeffizienten gegenueber dem Kochgefaess darstellen und als Punktauflage am Umfang der Waermequelle angreifen.

In der Veroeffentlichung US-A-4.676.151 wird ein Backblech beschrieben, das fuer die Herstellung von Pizzas Einsatz findet.

Dabei soll der Backvorgang im Hinblick auf die Anforderungen eines Fast-Food-Unternehmens aeusserst schnell und in einem Durchlaufofen erfolgen.

Um dem Pizzateig ueber die Blechunterseite eine groesstmoeglich Waermemenge zufuehren zu koennen, ist der Blechboden gelocht und zur Vergroesserung des Backblechbodens ist dieser mit Rillen versehen, um dadurch die durch einen Heissluffstrom aufgeheizte Flaeche des Backbleches wesentlich zu vergroessern.

Wie der Vorveroeffentlichung zu entnehmen ist, ist die Dicke des beschriebenen Backbleches in einer Groessenordnung von ca. 1,8 mm gewaehlt. Es handelt sich dabei um einen verhaeltnismaessig duennen Boden, der sich bei Hitzeeinwirkung erheblich verziehen und verformen wird. Dies kann aber bei einem Backblech gemaess US-A-4.676.151 unberuecksichtigt bleiben, denn auch bei verzogenem Boden wird dieser vollstaendig einem Heissluttstrom ausgesetzt sein und rasch erhitzt werden. Desweiteren wirken sich Verformungen des bekannten Backbleches nicht unguenstig auf die Waermeuebertragung aus. Auch die Stabilitaet der Auflage des Backbleches auf dem eingesetzten Foerderband wird nicht beinflusst werden.

Das bekannte Gefaess hat aber den Nachteil, dass es nicht auf einer Elektroplatte oder einem Gaskeramikfeld einsetzbar ist.

Bei Verwendung der staendig groesserer Beliebtheit findenden elektrischen Kochplatten oder keramischen Kochfeldern als Waermequelle, ist die auftretende Woelbung des Gefaessbodens als erheblicher Nachteil anzusehen.

Einmal tritt durch die Woelbung des Gefaessbodens eine Verkleinerung der mit der Kochplatte in Verbindung stehenden Oberflaeche ein, was die Waermeuebertragung wesentlich beeintraechtigt. Es nimmt die Uebertragung durch Waermestrahlung zu, doch die direkte Uebertragung der Waerme durch Flaechenkontakt nimmt ab, was zu einer allgemeinen Verschlechterung der Waermeuebertragung und einem hoeheren Energieverbrauch fuehrt.

Desweiteren wird aufgrund der Woelbung des Gefaessbodens die sichere Auflage des Gefaessbodens vermindert, das Kochgefaess neigt dazu, sich gegenueber der Waermequelle zu neigen, wenn nicht sogar ein Verrutschen gegenueber der Kochplatte, aufgrund zahlreicher Stoesse und Gegenstoesse eintritt. Dies stellt eine Gefahrenquelle fuer den Benuetzer der, z.B. bei Verwendung leichter Bratpfannen, in denen sich heisses Fett befindet, oder bei Verwendung von Toepfen, in denen sich kochendes Wasser befindet. Dieser Nachteil wird noch durch die Tatsache verstaerkt, dass Elektroplatten meistens kleinere, aus einer Ebene ragenden Auflageflaechen bilden, um unnoetige Waermeverluste zu vermeiden. Dies fuehrt zwangslaeufig zu einer wesentlich verminderten Auflageflaeche, die ein Verrutschen des Kochgefaesses nicht erlaubt, und zu einem Umkippen des Kochgefaesses fuehren kann.

Bei Kochgefaessen aus Stahl wurden bereits einige Verbesserungsvorschlaege gemacht, z.B. wird hier der Gefaessboden einer Vorverformung unterworfen, die in entgegengesetzter Richtung zur spaeter eintretenden Waermeverformung erfolgt, mit dem Versuch, bei Betriebstemperatur des Kochgefaesses, dem Boden einen im wesentlichen ebenen Verlauf zu verleihen. Dieser Vorschlag fuehrt nur dann zu zufriedenstellenden Ergebnissen, wenn verhaeltnismaessig elastische Werkstoffe, z.B. Stahl, fuer die Herstellung des Gefaesses verwendet werden. Die gewuenschten Vorteile treten aber dann nicht ein, wenn das Kochgefaess aus Aluminium besteht, da dieses Material einen stark ausgepraegten Hystereseeffekt bei Waermedehnung aufweist, oder bestrebt ist, den Boden des Kochgefaesses in die urspruengliche Form zurueckzufuehren, d.h. entgegen der aufgebrachten Vorverformung. Fuer Kochgefaesse aus Aluminium wurde daher bereits vorgeschlagen, konzentrische Rillungen mittels spanabhebendem Drehvorgang in den Gefaessboden einzubringen. Diese Eindrehungen werden als konzentrische Ringe in den Pfannenboden eingedreht, oder aber der Pfannenboden wurde mit konzentrischen Ringen durch Aufbringung von geeigneten Haftlacken versehen.

Die erste beschriebene Ausfuehrungsform bedarf eigens dafuer konstruierter Maschinen und fuehrt zu einer Zunahme der Fertigungskosten des Kochgefasses. Ferner werden die aufgezeigten Nachteile nicht zufriedenstellend geloest, da die konzentrischen Rillen immer noch eine thermische Verformung des Bodens erlauben, auch wenn die Verformung und Woelbung des Gefaessbodens in geringerem Masse auftritt. Sie fuehrt aber dennoch zu einer unerwuenschten Woelbung der Aussenflaeche des Pfannenbodens bei Verwendung des Kochgefaesses. Das Aufbringen einer Haftschicht aus Lack fuehrt lediglich zur Beseitigung einer der beschriebenen Nachteile, das Gefaess verrutscht nicht mehr auf dem Kochfeld, die unerwuenschte Woelbung des Pfannenbodens aufgrund der auftretenden unterschiedlichen Waermespannung kann aber dadruch nicht vermieden werden. Das Aufbringen von Lackschichten auf den Pfannenboden ist ferner verhaeltnismaessig teuer und stellt keine zufriedenstellende Loesung der Problematik dar. Im Laufe der Zeit verliert die aufgebrachte Lackschicht die gewuenschte Haftwirkung wegen allmaehlicher Zersetzung der Lackschicht.

Es ist Aufgabe der vorstehenden Erfindung, ein Kochgefaess aus Leichtmetall, z.B. aus Aluminium zum Zubereiten von Speisen vorzuschlagen, mit dem die genannten Nachteile vermieden werden koennen, wobei besonders bei Einstellen der gewuenschten Kochtemperatur eine ebene Auflageflaeche des Kochgefaesses erhalten bleibt, und ein Verschieben oder Verrutschen des Kochgefaesses auf der Kochplatte vermieden wird.

Diese Aufgabe wird durch ein Kochgefaess wie z.B. Pfanne, Kochtopf oder Braeter, aus Leichtmetall, wie Aluminium, zum Zubereiten von Speisen, bei dem die aeussere Auflageflaeche des Gefaessbodens in eine Vielzahl getrennter in sich geschlossener Teilflaechen unterteilt und im wesentlichen eben ist, dadurch geloest, dass die von Rillen begrenzten Teilflaechen bei Raumtemperatur des Kochgefaesses konkave Form aufweisen.

Es hat sich als besonders vorteilhaft erwiesen. dass die Rillungen durch Pressen oder Praegen des Gefaessbodens erzeugt werden und durch Materialverdraengung am Umfang der Teilflaechen eine Materialerhebung gebildet wird.

In vorteilhafter Weise sind die Rillungen mit einer Tiefe zwischen 0,5 und 2 mm ausgebildet.

Die geschlossenen Teilflaechen der Auflageflaeche weisen einen Flaecheninhalt von 0,5 bis 2 cm² auf.

In vorteilhafter Weise hat jede Teilflaeche sechseckige Form, auch quadratisch oder dreieckig ausgebildete Teilflaechen sind denkbar.

Diese und weitere Vorteile und Merkmale der Erfindung koennen der nun folgenden Beschreibung, einiger Ausfuehrungsbeispiele sowie den Zeichnungen entnommen werden.

Es zeigen:
Fig. 1 teilweise im Schnitt ein Kochgefaess mit dem erfindungsgemaessen Boden;
Fig. 2 in vergroessertem Massstab das Detail A gemaess Fig. 1;
Fig. 3 bis 5 einige Ausfuehrungsbeispiele moeglicher Teilflaechen des erfindungsgemaessen Behaelterbodens.

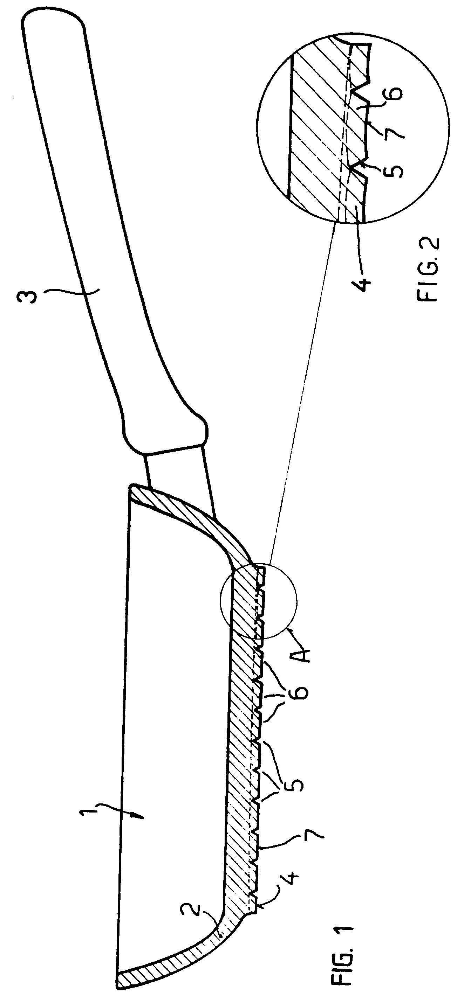

In den Figuren 1 und 2 wird eine Bratpfanne 1 dargestellt. die einen Boden, der gesamthaft mit 2 gekennzeichnet ist und ein Griff 3 aufweist. Erfindungsgemaess weist der Boden 2 eine auessere Auflageflaeche 4 auf, die mit Einpraegungen oder Rillungen 5 versehen ist. Die Rillungen 5 kreuzen sich. Somit wird eine Vielzahl von Teilflaechen 6 gebildet, die eine zum Kochfeld gerichtete Auflageflaeche 7 aufweisen. Die Teilflaechen 6, 7 weisen leicht gewoelbte Form auf, wie dies besonders der vergroesserten Darstellung gemaess Fig. 2 zu entnehmen ist.

Die Rillungen 5, die sich gegenseitig kreuzen, um somit eine Vielzahl geschlossener Teilflaechen 6 zu bilden, weisen im Querschnitt in vorteilhafter Weise Dreiecks- oder Keilform auf, wie dies in Fig. 2 dargestellt ist. Die Tiefe der Rillungen liegt zwischen 0,5 und 2 mm.

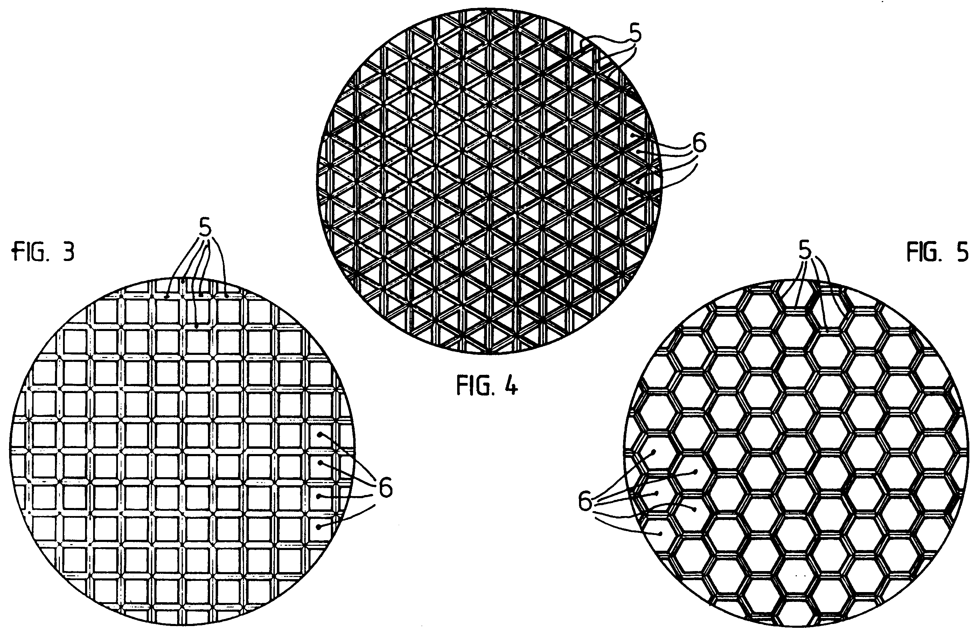

Diese Rillungen 5 koennen geradlinig angeordnet sein, wie den Fig. 3 und 4 zu entnehmen ist. Die geradlinigen Rillungen 5 sind dabei zueinander um 90° oder um 60° versetzt angeordnet. Somit wird durch die Rillungen 5 eine Vielzahl von Teilflaechen 6 gebildet, die quadratische oder dreieckige Form aufweisen. Es koennen aber auch segmentartige oder bogenartige Teilflaechen vorgeshen werden, bei denen die Rillungen keinen geradlinigen Verlauf haben, wie dies z.B. in Fig. 5 dargestellt ist. Hier sind die Rillungen 5 nicht geradlinig angeordnet sind, sondern umschreiben kleine sechseckige Teilflaechen. Ein weiterer Vorschlag kann darin bestehen, im Verlauf kreisfoermige, ovale oder geschweifte Rillungen 5 zur Bildung einer Vielzahl von Teilflaechen 6 vorzusehen.

In vorteilhafter Weise werden die Rillungen 5 ohne spanabhebende Materialabnahme gebildet, z.B. durch einen Press- oder Praegevorgang, der auf die Aussenflaeche des Kochgefaesses einwirkt. Dadurch wird eine Vielzahl kleiner Teilflaechen 6 gebildet. Durch den Press- oder Praegevorgang wird durch die auftretende Materialverdraengung am Umfang der Teilfaechen 6 eine zusaetzliche Materialerhebung gebildet, die zu einer erhoehten Griffigkeit des Gefaessbodens fuehrt, was ein Verrutschen des Kochgefaesses 1 auf den glatten Kochplatten vermeidet.

In vorteilhafter Weise weisen die so erzeugten Teilflaechen 6 regelmaessige geometrische Form auf, z.B. die Form eines Quadrates oder eines Dreieckes, eines Romboids, eines Sechseckes usw. Die Teilflaechen 7 haben eine ungefaehre Flaechengroesse zwischen 0,5 und 2 cm².

Es hat sich ferner als vorteilhaft erwiesen, die Teilflaechen 7 beim Pressovorgang nicht eben, sondern konkav auszubilden, derart dass eine Woelbung vom Pfannenboden nach unten zur Kochplatte hin entstehtl (Fig. 2). Dadurch kann eventuell oertlich noch auftretenden Verformungen aufgrund eintretender Waermedehung entgegengewirkt werden. Bei Erreichen der Kochtemperatur wird somit eine ebene Auflage des Gefaessbodens auf dem Kochfeld erreicht.

Bei Erwaermung des Gefaessbodens 4 durch eine elektrische Heizplatte oder durch ein keramisches Kochfeld, wird die nicht immer gleichmaessig eintretende Waermedehnung der zahlreichen Teilflaechen 7 des Gefaessbodens 4 durch die Rillungen 5 aufgenommen und ausgeglichen. Aufgrund der Rillungen 5 wird jeder Teilflaeche 7 die Moeglichkeit gegeben, eine geringe und beschraenkte Waermedehung durchzufuehren. Dies ist ausreichend, um eine unerwuenschte Woelbung des gesamten Bodens 4 zu vermeiden. Ferner, durch Vorsehen einer negativen konkaven Flaeche der einzelnen Teilflaechen 7, erfolgt ein ebenes Ausrichten aller Teilflaechen 7 bei Erreichen der Kochtemperatu ohne Woelbung des Bodensr. Dadurch haben die Teilflaechen 7 bei Erreichen der Kochtemperatur im wesentlichen ebene Form, was eine ebene und groesstmoegliche Auflageflaeche zwischen Gefaessboden 4 und der Kochflaeche gewaehrleistet. Die vollkommen ebene Auflage des Gefaessbodens 4 auf der Kochflaeche erlaubt es, die von einer Waermequelle abgegebenen Waerme in bestmoeglicher Weise zu nutzen, ferner bleibt das Gefaess 1 sicher auf der Kochplatte stehen, da die Flaeche des Kochgefaesses keine Woelbung erfaehrt und vollstaendig eben auf der Kochflaeche aufliegt.

## Patentansprüche

1. Kochgefäß wie z.B. Pfanne, Kochtopf oder Bräter, aus Leichtmetall, wie Aluminium, zum Zubereiten von Speisen, bei dem die äußere Auflagefläche (4) des Gefäßbodens (2) in eine Vielzahl getrennter, in sich geschlossener Teilflächen (6, 7) unterteilt und im wesentlichen eben ist, **dadurch gekennzeichnet, daß** die von Rillen (5) begrenzten Teilflächen (6, 7) bei Raumtemperatur des Kochgefäßes eine konkave Form aufweisen.

2. Kochgefaess, nach Patentanspruch 1, **dadurch gekennzeichnet,** dass die Rillungen (5) durch Pressen oder Praegen des Gefaessbodens (2, 4) erzeugt werden und durch Materialverdraengung am Umfang der Teilflaechen (6, 7) eine Materialerhebung gebildet wird.

3. Kochgefaess, nach Patentanspruch 1, **dadurch gekennzeichnet,** dass die Rillungen (5) eine Tiefe zwischen 0,5 und 2 mm aufweisen.

4. Kochgefaess, nach Patentanspruch 1, **dadurch gekennzeichnet,** dass die geschlossenen Teilflaechen (6, 7) einen Flaecheninhalt von 0,5 - 2 cm² aufweisen.

5. Kochgefaess, nach Patentanspruch 1, **dadurch gekennzeichnet,** dass jede Teilflaeche (6, 7) sechseckige Form aufweist.

6. Kochgefaess, nach Patentanspruch 1, **dadurch gekennzeichnet,** dass jede Teilflaeche (6, 7) quadratische Form aufweist.

7. Kochgefaess, nach Patentanspruch 1, **dadurch gekennzeichnet,** dass jede Teilflaeche (6, 7) dreieckige Form aufweist.

## Claims

1. Cooking vessel (1), for example a pan, a saucepan or a roasting pan, made of light metal, such as aluminium, for the preparation of food dishes, in which the outer bearing surface (4) of the vessel base (2) is divided up into a plurality of separate, self-enclosed part-surfaces (6, 7), characterised in that the part-surfaces (6, 7), which are limited by channels (5), exhibit a concave form when the cooking vessel is at room temperature.

2. Cooking vessel according to Patent Claim 1, characterised in that the channellings (5) are produced by pressing or stamping of the vessel base (2, 4) and a material elevation is formed on the periphery of the part-surfaces (6, 7) by crowding.

3. Cooking vessel according to Patent Claim 1, characterised in that the channellings (5) exhibit a depth of between 0.5 and 2 mm.

4. Cooking vessel according to Patent Claim 1, characterised in that the self-enclosed part-surfaces (6, 7) exhibit an area of 0.5 - 2 cm².

5. Cooking vessel according to Patent Claim 1, characterised in that each part-surface (6, 7) exhibits a hexagonal form.

6. Cooking vessel according to Patent Claim 1, characterised in that each part-surface (6, 7) exhibits a square form.

7. Cooking vessel according to Patent Claim 1, characterised in that each part-surface (6, 7) exhibits a triangular form.

## Revendications

1. Récipient de cuisson (1), comme par exemple une poêle, une casserole ou une cocotte en métal léger, tel que l'aluminium, pour la préparation des aliments, où la surface d'appui externe (4) du fond du récipient (2) est répartie en une multitude de surfaces partielles séparées (6,7) fermées en soi, caractérisé en ce que les surfaces partielles (6, 7) délimitées par des gorges (5) présentent à la termpérature ambiente du récipient de cuisson une forme concave.

2. Récipient de cuisson selon la revendication 1, caractérisé en ce que les gorges (5) sont réalisées par matriçage ou emboutissage du fond du récipient (2, 4) et qu'une élévation de matériau est réalisée sur le pourtour des surfaces partielles (6, 7) par le déplacement ou refoulement du matériau.

3. Récipient de cuisson selon la revendication 1, caractérisé en ce que les gorges (5) présentent une profondeur comprise entre 0,5 et 2 mm.

4. Récipient de cuisson selon la revendication 1, caractérisé en ce que les surfaces partielles fermées (6, 7) ont une superficie comprise entre 0,5 - 2 cm².

5. Récipient de cuisson selon la revendication 1, caractérisé en ce que chaque surface partielle (6, 7) a une forme hexagonale.

6. Récipient de cuisson selon la revendication 1, caractérisé en ce que chaque surface partielle (6, 7) a une forme carré.

7. Récipient de cuisson selon la revendication 1, caractérisé en ce que chaque surface partielle (6, 7) a une forme triangulaire.
